# EUROPÄISCHE PATENTANMELDUNG

(11) **EP 1 733 833 A1**
(43) Veröffentlichungstag der Anmeldung: **20.12.2006**
(21) Anmeldenummer: 05022155.5
(22) Anmeldetag: 11.10.2005
(51) Int. Cl.: B23K 3/06, B23K 1/08, H05K 3/34

(54) **Vorrichtung zum Wellenlöten mit einer mehrere Lotaustrittsöffnungen aufweisenden Lötdüse, deren Dichte sich in Förderrichtung der Werkstücke ändert**

(30) Priorität: 17.06.2005 DE 102005028196
(71) Anmelder: Linde Aktiengesellschaft, 65189 Wiesbaden (DE); epm Handels AG, 8954 Geroldswil (CH)
(72) Erfinder: Isler, Hans, 8967 Widen (CH); Wandke, Ernst Dr., 82538 Geretsried (DE)
(74) Vertreter: Kasseckert, Rainer

(57) **Zusammenfassung**

Die Erfindung betrifft eine Vorrichtung zum Wellenlöten von Werkstücken (4) mit einer Fördereinrichtung zum Fördern der Werkstücke (4) entlang einer Förderbahn (3) in einer Förderrichtung und mit einer unterhalb der Förderbahn (3) befindlichen Lötdüse (1). Die Lötdüse (1) weist mehrere Lotaustrittsöffnungen (8) auf, deren Dichte sich in der Förderrichtung (3) der Werkstücke (4) ändert.

## Beschreibung

Die Erfindung betrifft eine Vorrichtung zum Wellenlöten von Werkstücken mit einer Fördereinrichtung zum Fördern der Werkstücke entlang einer Förderbahn in einer Förderrichtung und mit einer unterhalb der Förderbahn befindlichen Lötdüse, die mehrere Lotaustrittsöffnungen aufweist.

Das Wellenlöten gehört neben dem Reflow-Löten zu den wichtigsten Verbindungsverfahren zur Herstellung elektronischer Baugruppen. Beim Wellenlöten wird die zu verlötende elektronische Baugruppe, beispielsweise eine Leiterplatte, entlang einer Förderbahn über eine Lötwelle geführt. Die Lötwelle wird mittels einer Lötdüse erzeugt, welche mehrere Lotaustrittsöffnungen aufweist, aus denen das Lot austritt. Das Lot fließt entlang der Oberseite der Lötdüse und benetzt dabei die Unterseite der darüber geförderten Leiterplatte mit Lot.

Für die Qualität der Lötung kommt der Gestaltung der Lötdüse entscheidende Bedeutung zu.

Üblicherweise werden die zu lötenden Werkstücke oder Bauteile unter einem bestimmten Winkel zur Horizontalen, dem sogenannten Lötwinkel, über die Lötwelle gefördert. Aus dem Stand der Technik ist es auch bekannt, die die Lötwelle erzeugende Lötdüse ebenfalls um den Lötwinkel gegen die Horizontale geneigt anzuordnen, um über die gesamte Länge der Lötdüse jeweils denselben Abstand zwischen Lötdüse und der Unterseite des zu lötenden Bauteils sicherzustellen. Auf diese Weise soll dem Bauteil über die Länge der Lötdüse immer das gleiche Lotangebot zur Verfügung gestellt werden. _

Das aus den Lotaustrittsöffnungen austretende Lot fließt im Wesentlichen entlang der Schräge von der Oberseite der Lötdüse ab. Diese Vorzugsrichtung für das abfließende Lot hat zur Folge, dass auf der Oberseite der Lötdüse eine Lotwelle mit unterschiedlicher Wellendicke entlang der Lötdüse entsteht. Das ungleichmäßige Lotangebot bewirkt eine ungleichmäßige und damit nicht optimierte Verteilung des durch das Lot auf das zu lötende Bauteil ausgeübten Drucks.

Aufgabe vorliegender Erfindung ist es daher, eine Vorrichtung der eingangs genannten Art zu entwickeln, mit der eine Lotwelle erzeugt werden kann, die eine über die Länge der Lötdüse gleichbleibende Dicke aufweist.

Diese Aufgabe wird durch eine Vorrichtung zum Wellenlöten von Werkstücken gelöst, welche mit einer Fördereinrichtung zum Fördern der Werkstücke entlang einer Förderbahn in einer Förderrichtung versehen ist und die eine unterhalb der Förderbahn befindliche Lötdüse besitzt, die mehrere Lotaustrittsöffnungen aufweist, wobei sich die Dichte der Lotaustrittsöffnungen in der Förderrichtung der Werkstücke ändert.

Unter "Dichte" der Lotaustrittsöffnungen wird hierbei das Verhältnis aus der Summe aller in einer Einheitsfläche befindlichen Querschnittsflächen der Lotaustrittsöffnungen zu der Einheitsfläche verstanden.

Vorzugsweise werden die Werkstücke in ansteigender Richtung über die Lotwelle gefördert, wobei die Förderrichtung mit der Horizontalen bevorzugt einen Winkel zwischen 3° und 15°, besonders bevorzugt zwischen 5° und 10°, einschließt. Bei einer zur Horizontalen ansteigenden Förderrichtung fließt das aus den Lotaustrittsöffnungen austretende Lot entgegen der Förderrichtung der Werkstücke von der Oberseite der Lötdüse ab.

Erfindungsgemäß werden in diesem Fall die Lotaustrittsöffnungen so angeordnet beziehungsweise ausgeführt, dass deren Dichte in der Förderrichtung abnimmt. Am unteren Ende der Lötdüse, an dem das Lot mit relativ großer Geschwindigkeit abfließt, ist die Dichte der Lotaustrittsöffnungen größer, so dass der Lotwelle mehr Lot zugeführt wird als am oberen Ende der Lötdüse. Auf diese Weise wird eine über die gesamte Länge der Lötdüse gleichmäßig dicke Lotwelle erzeugt.

In einer bevorzugten Ausführungsform wird die Lötdüse mit Lotaustrittsöffnungen unterschiedlicher Größe, das heißt unterschiedlicher Querschnittsfläche, versehen. Die Größe einer Lotaustrittsöffnung hängt hierbei von deren Lage auf der Lötdüse ab. In der Förderrichtung der Werkstücke ändert sich die Querschnittsfläche der Lotaustrittsöffnungen von Vorteil gleichmäßig, vorzugsweise linear mit dem Abstand vom unteren bzw. vorderen Ende der Lötdüse. Bei einer gegen die Horizontalen steigenden Förderbahn der Werkstücke nimmt die Größe der Lotaustrittsöffnunge n in der Förderrichtung ab. Im Bereich des vorderen Endes der Lötdüse, über das das Werkstück zuerst geführt wird, werden größere Lotaustrittsöffnungen vorgesehen, während am Lotaustrittsöffnungen mit kleinerem Querschnitt vorgesehen.

Es kann auch von Vorteil sein, anstelle der Variation der Größe der Lotaustrittsöffnungen deren Anzahl pro Flächeneinheit in der Förderrichtung zu variieren. In diesem Fall besitzen alle Lotaustrittsöffnungen dieselbe Querschnittsfläche, deren gegenseitiger Abstand ändert sich jedoch in der Förderrichtung.

Bei einer gegen die Horizontale ansteigenden Förderbahn werden beispielsweise am vorderen, unteren Ende der Lötdüse die Lotaustrittsöffnungen dichter angeordnet als am hinteren, oberen Ende. Aufgrund der geringeren Dichte der Lotaustrittsöffnungen am hinteren Ende der Lötdüse tritt dort weniger Lot aus als am vorderen Ende mit hoher Dichte an Lotaustrittsöffnungen. Es wird also in dem Bereich, in dem das Lot langsamer abfließt, weniger Lot zugegeben als in Bereichen, in denen das Lot eine höhere Fließgeschwindigkeit aufweist.

Selbstverständlich ist es auch möglich, sowohl die Größe der Lotaustrittsöffnungen als auch deren Anzahl pro Flächeneinheit in der Förderrichtung zu variieren.

Der optimale Lötwinkel hängt von der Art und Ausführung der zu lötenden Werkstücke und vom verwendeten Lot ab. Die bekannten Lötdüsen sind mit der Lötanlage verschweißt, so dass in der Praxis eine Optimierung des Lötwinkels nur schwer möglich ist.

Vorzugsweise wird daher eine Lötdüse vorgesehen, welche ein auswechselbares Düsenoberteil aufweist, das mit den Lotaustrittsöffnungen versehen ist. Besonders bevorzugt ist das Düsenoberteil keilförmig ausgebildet ist. Durch Auswechseln des Düsenoberteils kann somit auf einfache Weise die Lotwelle an einen geänderten Lötwinkel angepasst werden, so dass die Parallelität zwischen Förderbahn der Werkstücke und der Lotwelle gewährleistet ist.

Das Düsenoberteil wird bevorzugt als Stanz- und Biegeteil ausgeführt. Diese Fertigungsmethode erlaubt auf wirtschaftliche Weise die Herstellung verschiedenster Formen und Anordnungen von Lotaustrittsöffnungen.

Durch das auswechselbare Düsenoberteil ergeben sich auch große Vorteile bei der Wartung der Lötanlage. Die Reinigung der Lötanlage kann nämlich nunmehr ohne aufwändige Demontage der gesamten Lötdüse erfolgen.

Anstelle eines auswechselbaren Düsenoberteils kann die Anpassung der Lotwelle an unterschiedliche Lötwinkel von Vorteil auch dadurch erfolgen, dass der Winkel der Lötdüse und / oder des Düsenoberteils zur Horizontalen verstellbar ist. Das Düsenoberteil öder die gesamte Lötdüse können um einen Drehpunkt geschwenkt werden, so dass die Oberseite der Lötdüse beziehungsweise des Düsenoberteils an den Winkel der Förderbahn so angepasst werden kann, dass Lotwelle und Förderbahn parallel zueinander verlaufen.

Wie oben beschrieben, wird das Werkstück entlang der Förderbahn transportiert, über der Lötdüse mit der Lotwelle in Kontakt gebracht und am Ende der Lötdüse wieder aus der Lotwelle ausgetaucht. Die Lötqualität hängt insbesondere auch von der Abrisskante zwischen dem aus der Lotwelle austauchenden Werkstück und der Lotwelle ab.

Bei den meisten aus dem Stand der Technik bekannten Lötdüsen bildet sich die Abrisskante als eine mehr oder weniger gerade, rechtwinklig zur Förderrichtung verlaufende Linie aus. In der DE 43 29 000 A1 sind auch Düsenkonstruktionen beschrieben, die eine dreieckförmige Ausbildung der Abrisskante zur Folge haben.

Es wurde nunmehr herausgefunden, dass besonders gute Lötergebnisse erreicht werden, wenn sich die Abrisskante nicht wie im zitierten Stand der Technik dreieckförmig ausbildet, sondern einen "weichen" Verlauf nimmt. Von Vorteil weist daher die Lötdüse quer zur Förderrichtung mehrere Lotaustrittsöffnungen auf, von denen die in Förderrichtung äußersten Lotaustrittsöffnungen einen wellenlinienförmigen oder kreisbogenförmigen Verlauf bilden.

Durch diese Ausführung der Lotaustrittsöffnungen ergibt sich eine wellenförmig oder kreisbogenförmig verlaufende Abrisskante ohne scharfe Übergänge, wie sie sich beispielsweise bei der bekannten dreieckförmigen Ausführung an der Spitze des oder der Dreiecke einstellen.

Konkret haben sich beispielsweise die im Folgenden genannten Ausführungen der Lotaustrittsöffnungen als günstig erwiesen:
Die Lotaustrittsöffnungen werden jeweils als kreisförmige Bohrungen ausgeführt, wobei quer zur Förderrichtung mehrere Lotaustrittsöffnungen vorgesehen sind. Die in Förderrichtung letzte Reihe von Lotaustrittsöffnungen besitzt einen halbkreis-, kreisbogen- oder wellenförmigen Verlauf, das heißt die gedachte Verbindungslinie der in Förderrichtung jeweils letzten Lotaustrittsöffnungen weist keine scharfen Übergänge auf.
Anstelle von kreisförmigen Lotaustrittsöffnungen ist es auch möglich, schlitzförmige Lotaustrittsöffnungen vorzusehen. Die schlitzförmigen Lotaustrittsöffnungen der in Förderrichtung letzten Reihe besitzen bevorzugt jeweils eine Kreisbogenform und sind so angeordnet, dass die gedachte Verbindungslinie der kreisbogenförmigen Lotaustrittsöffnungen ebenfalls einen Kreisbogen oder eine Wellenform ergibt.
Die Erfindung sowie weitere Einzelheiten und vorteilhafte Ausgestaltungen der Erfindung werden im Folgenden anhand von den in den Zeichnungen schematisch dargestellten Ausführungsbeispielen näher erläutert. Hierbei zeigt
   - Figur 1: eine erfindungsgemäße Lötdüse,
   - Figur 2: ein an den Lötwinkel angepasstes, keilförmiges Düsenoberteil,
   - Figur 3: ein schwenkbares Düsenoberteil,
   - Figur 4: die Draufsicht auf eine spezielle Anordnung der Lotaustrittsöffnungen im Bereich der Abrisskante und
   - Figur 5: eine weitere bevorzugte Anordnung der Lotaustrittsöffnungen im Bereich der Abrisskante.

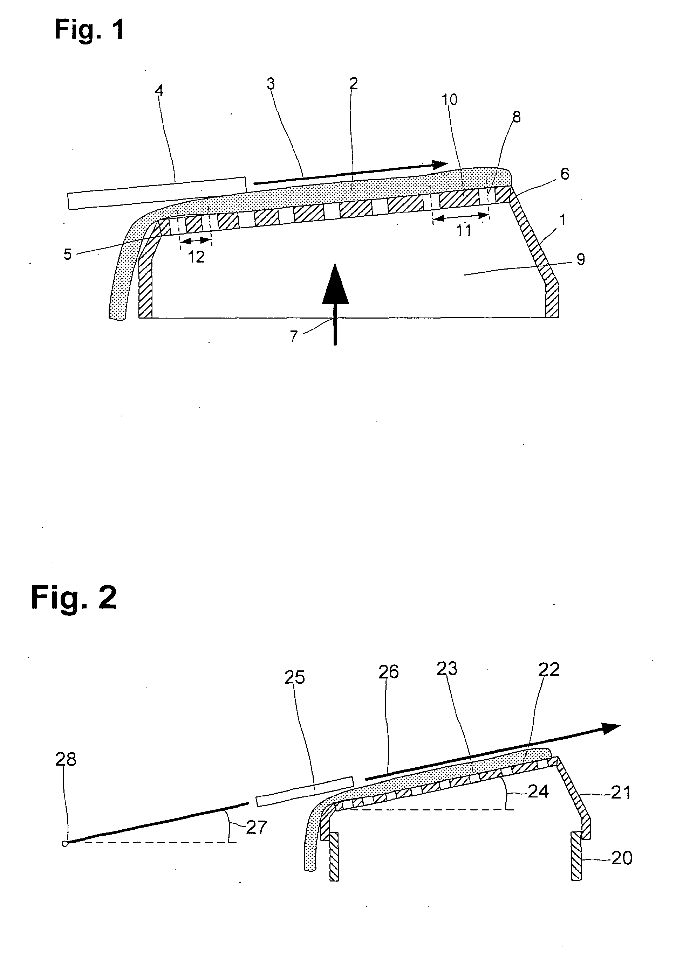

In Figur 1 ist eine erfindungsgemäße Lötdüse 1 dargestellt, die die Erzeugung einer Lotwelle 2 gleichmäßiger Dicke, von beispielsweise 8 bis 20 mm Dicke, ermöglicht. Die Förderbahn 3 der zu lötenden Werkstücke 4, beispielsweise von zu lötenden Leiterplatten, verläuft unter einem Winkel von zum Beispiel 7° zur Horizontalen. In der Figur 1 werden die Werkstücke 4 entlang der Förderbahn 3 von links unten nach rechts oben transportiert. Hierbei tauchen die Werkstücke 4 im Bereich des unteren Endes 5 der Lötdüse 1 in die Lotwelle 2 ein. Am oberen Ende 6 der Lötdüse 1 tauchen die Werkstücke wieder aus der Lotwelle 2 aus.

Die Lotwelle 2 wird durch einen Lotstrom 7 erzeugt, der durch an der Oberseite 10 der Lötdüse 1 vorgesehene Lotaustrittsöffnungen 8 aus dem Inneren 9 der Lötdüse 1 austritt. Die Lotaustrittsöffnungen 8 besitzen alle dieselbe Querschnittsfläche.

Die Oberseite 10 der Lötdüse ist parallel zur Förderbahn 3 der Werkstücke 4 ausgerichtet, das heißt, sie steigt unter dem Lötwinkel, im vorliegenden Beispiel unter einem Winkel von 7°, gegen die Horizontale in Förderrichtung an. Das aus den Lotaustrittsöffnungen 8 austretende Lot fließt unter dem Einfluss der Schwerkraft entgegen der Förderrichtung nach links ab.

Am oberen Ende 6 der Lötdüse 1 hat das abfließende Lot 7 eine relativ niedrige Fließgeschwindigkeit. Am unteren Ende 5 strömt das Lot 7 dagegen relativ schnell. Bei einer gleichmäßigen Verteilung der Lotaustrittsöffnungen 8 über die Länge der Oberseite 10 der Lötdüse 1 würde die ungleiche Geschwindigkeitsverteilung zu einem unterschiedlich dicken Lotstrom 7 führen. In der Praxis zeigt sich, dass der Lotstrom am oberen Ende 6 dann etwa 1 bis 2 mm dicker ist als am unteren Ende 5.

Erfindungsgemäß ändern sich daher die Abstände 11., 12 der Lotaustrittsöffnungen 8 in Richtung der Förderbahn 3. Am unteren Ende 5 sind die Lotaustrittsöffnungen 8 dichter angeordnet, das heißt der Abstand 12 zweier benachbarter Lotaustrittsöffnungen 8 ist geringer als der Abstand 11 zweier benachbarter Lotaustrittsöffnungen 8 am oberen Ende 6. In der in Figur 1 gezeigten Ausführung nimmt der Abstand zweier benachbarter Lotaustrittsöffnungen 8 vom unteren Ende 5 zum oberen Ende 6 linear mit dem Abstand zum unteren Ende 5 der Lötdüse 1 zu.

In Figur 2 ist schematisch eine Lötdüse dargestellt, welche einen Düsenstock 20 und ein Düsenoberteil 21 aufweist. Das Düsenoberteil 21 ist keilförmig ausgebildet und über einen geeigneten Schnellverschluss leicht mit dem Düsenstock 20 verbindbar und von diesem lösbar. Die mit Lotaustrittsöffnungen 23 versehene Oberseite 22 des Düsenoberteils 21 ist unter einem bestimmten Winkel 24 gegen die Horizontale geneigt.

Die zu lötenden Leiterplatten 25 werden entlang einer Förderbahn 26, welche um den Lötwinkel 27 gegen die Horizontale geneigt ist, über die sich auf der Oberseite des Düsenoberteils 21 bildende Lotwelle geführt. Die Förderbahn 26 kann um einen Drehpunkt 28 geschwenkt werden, um den Lötwinkel 27 entsprechend den Lötanforderungen zu optimieren.

Erfindungsgemäß sind mehrere Düsenoberteile 21 vorgesehen, deren Oberseiten jeweils um unterschiedliche Winkel gegen die Horizontale geneigt sind. Vorzugsweise sind außerdem Form, Größe und Anordnung der Lotaustrittsöffnungen an den jeweiligen Winkel angepasst. Je nachdem welcher Lötwinkel 27 für die Förderbahn 26 eingestellt wird, wird das entsprechende Düsenoberteil 21 auf den Düsenstock 20 aufgesetzt, so dass die Förderbahn 26 und die Oberseite des Düsenoberteils parallel zueinander verlaufen.

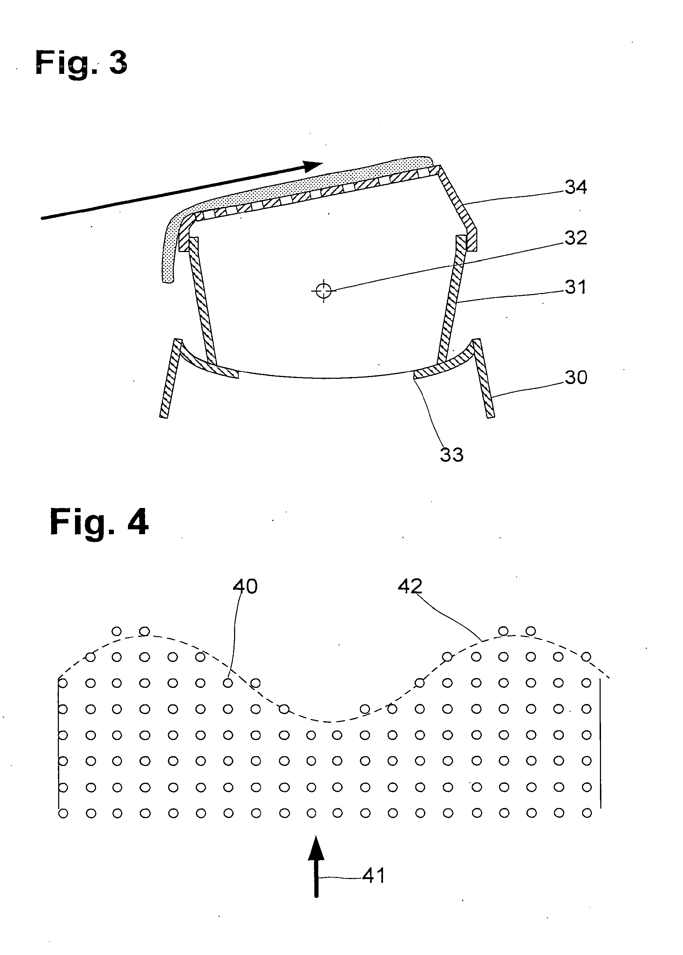

Figur 3 zeigt ene alternative Ausführung zur Anpassung der Lötdüse an unterschiedliche Lötwinkel. Die gezeigte Lötdüse besitzt einen Düsenstock 30, über den das Lot zugeführt wird. Mit dem Düsenstock 30 ist ein schwenkbares Düsenteil 31 verbunden, welches um einen Drehpunkt 32 schwenkbar ist. Die Oberseite 33 des Düsenstocks 30 besitzt einen kurvenförmigen Verlauf, so dass bei einem Verdrehen des schwenkbaren Düsenteils 31 um den Drehpunkt 32 der Übergang zwischen dem Düsenstock 30 und dem schwenkbaren Düsenteil 31 stets dicht ist und kein Lot aus dem Inneren der Lötdüse austritt.

Das schwenkbare Düsenteil 31 kann an seiner Oberseite direkt mit Lotaustrittsöffnungen versehen sein oder, wie in Figur 3 zu sehen, mit einem lösbar befestigten und auswechselbaren Düsenoberteil 34 ausgestattet sein. Hierfür kann beispielsweise ein Düsenoberteil verwendet werden, wie es anhand von Figur 2 erläutert wurde.

Figur 4 zeigt eine Draufsicht auf die Anordnung der Lotaustrittsöffnungen 40 am oberen Ende der Lötdüsenoberseite. Die zu lötenden Werkstücke werden in Figur 4 in der Förderrichtung 41 transportiert. Quer zur Förderrichtung 41 besitzt die Lötdüse zahlreiche Lotaustrittsöffnungen 40. Die Lotaustrittsöffnungen 40 sind dabei so angeordnet, dass die in Förderrichtung letzte Reihe 42 von Lotaustrittsöffnungen einen wellenförmigen Verlauf nimmt. Diese letzte Reihe 42 bestimmt im Wesentlichen die Abrisskante zwischen dem aus der Lotwelle austauchenden Werkstück und der Lotwelle. Bei der gezeigten Ausführung ergibt sich eine weiche Abrisskante ohne scharfe Übergänge. Durch die wellenförmige Abrisskante wird ein definiertes Abreißen des Lotes von dem Werkstück erreicht, ohne dass es zu lokalen Lotansammlungen und unerwünschten Lotbrücken auf eng bestückten Leiterplatten kommt.

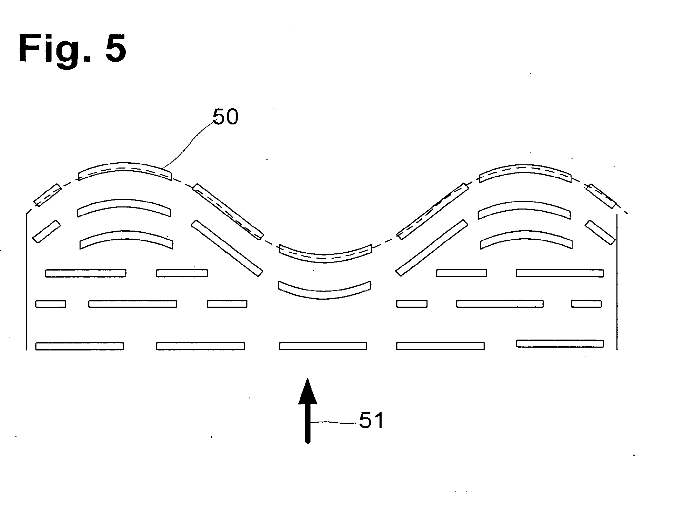

Eine alternative Ausführung der Lotaustrittsöffnungen ist in Figur 5 gezeigt. Die Querschnittsflächen der in Förderrichtung 51 letzten Reihe von Lotaustrittsöffnungen 50 sind länglich und kreisbogenförmig ausgeführt. Die einzelnen Lotaustrittsöffnugnen 50 sind dabei wiederum so angeordnet, dass sich eine wellenförmige Abrisskante ergibt. Die länglichen beziehungsweise schlitzförmigen Lotaustrittsöffnungen 50 lassen sich insbesondere dann wirtschaftlich fertigen, wenn die Lötdüse oder zumindest das Düsenoberteil als Stanz- und Biegeteil ausgeführt ist.

## Patentansprüche

1. Vorrichtung zum Wellenlöten von Werkstücken (4) mit einer Fördereinrichtung zum Fördern der Werkstücke (4) entlang einer Förderbahn (3) in einer Förderrichtung (3) und mit einer unterhalb der Förderbahn (3) befindlichen Lötdüse (1), die mehrere Lotaustrittsöffnungen (8) aufweist, **dadurch gekennzeichnet, dass** sich die Dichte der Lotaustrittsöffnungen (8) in der Förderrichtung (3) der Werkstücke (4) ändert.

2. Vorrichtung nach Anspruch 1, **dadurch gekennzeichnet, dass** sich die Größe der Lotaustrittsöffnungen (8) in der Förderrichtung (3) der Werkstücke (4) ändert.

3. Vorrichtung nach einem der Ansprüche 1 oder 2, **dadurch gekennzeichnet, dass** sich die Anzahl der Lotaustrittsöffnungen (8) pro Flächeneinheit in der Förderrichtung (3) der Werkstücke (4) ändert.

4. Vorrichtung nach einem der Ansprüche 1 bis 3, **dadurch gekennzeichnet, dass** die Förderrichtung (3) mit der Horizontalen einen Winkel zwischen 3° und 15°, bevorzugt zwischen 5° und 10°, einschließt.

5. Vorrichtung nach einem der Ansprüche 1 bis 4, **dadurch gekennzeichnet, dass** die Lötdüse (1) ein auswechselbares Düsenoberteil (21) aufweist, welches mit den Lotaustrittsöffnungen (8) versehen ist.

6. Vorrichtung nach Anspruch 5, **dadurch gekennzeichnet, dass** das Düsenoberteil (21) keilförmig ausgebildet ist.

7. Vorrichtung nach einem der Ansprüche 1 bis 6, **dadurch gekennzeichnet, dass** der Winkel der Lötdüse (31) und / oder des Düsenoberteils (34) zur Horizontalen verstellbar ist.

8. Vorrichtung nach einem der Ansprüche 1 bis 7, **dadurch gekennzeichnet, dass** die Lötdüse (1) quer zur Förderrichtung (41, 51) mehrere Lotaustrittsöffnungen (40, 50) aufweist, von denen die in Förderrichtung (41, 51) äußersten Lotaustrittsöffnungen einen wellenlinienförmigen oder kreisbogenförmigen Verlauf (42) bilden.
